# EUROPÄISCHE PATENTSCHRIFT

(11) **EP 0 442 069 B1**
(45) Veröffentlichungstag und Bekanntmachung des Hinweises auf die Patenterteilung: **19.01.1994**
(21) Anmeldenummer: 90123548.1
(22) Anmeldetag: 07.12.1990
(51) Int. Cl.: B01D 29/15

(54) **Filterkerze mit Filterstrumpf**
Filter candle with filter sock
Bougie filtrante avec manchon filtrant

(30) Priorität: 16.02.1990 DE 4004794
(43) Veröffentlichungstag der Anmeldung: 21.08.1991
(73) Patentinhaber: BAYER AG, 51368 Leverkusen (DE)
(72) Erfinder: Lührmann, Theo, Dipl.-Ing., W-4150 Krefeld (DE); Hocks, Wilfried, Dr., W-4150 Krefeld (DE); von Harpe, Hannes, Dr., W-4150 Krefeld 11 (DE)

(56) Entgegenhaltungen:
- EP-A- 0 343 976
- WO-A-90/00434
- DE-U- 8 711 084

## Beschreibung

Die Erfindung betrifft eine Filterkerze für Filtervorrichtungen, speziell zum Filtern fluider Medien höherer Viskosität, bestehend aus einem Filterkörper und einem Stützelement sowie einem Filterstrumpf, der mittels einer Kappe dichtend und lösbar am oberen Ende des Filterkörpers befestigt ist und mittels einer Verbindungsvorrichtung am Sockel des Filterkörpers dichtend und lösbar befestigt ist.

Filterkerzen dieser Art sind beispielsweise aus DE-C2-3326288 bekannt. Die bekannte Filterkerze besteht aus einem Verdrängerkörper, der von einem Stützrohr umgeben ist. Dieses Stützrohr stützt mit der Außenseite einen Filterschlauch ab. Der Filterschlauch ist auswechselbar. Zum Auswechseln des Filterschlauches muß die gesamte Filterkerze aus der Bodenbefestigung ausgeschraubt werden. Zu diesem Zweck ist die Filterkerze an ihrem oberen Ende als Sechskantschraube ausgebildet. Nach dem Ausschrauben der gesamten Filterkerze muß zum Austausch des Filterschlauches noch ein am oberen Ende der Filterkerze angeschraubter Konusring abgeschraubt werden. Durch die Konusringe, von denen sich einer ebenfalls am unteren Ende der Filterkerze befindet, wird der Filterschlauch gegen Dichtringe gepreßt, die mit dem Verdrängerkörper verbunden sind. Zum Wechsel des Filterschlauches muß dieser nach dem Abschrauben des Konusrings noch über die Dichtringe gezogen und der neue Filterschlauch entsprechend aufgezogen werden und in Umkehrung aller Schritte wieder befestigt werden.

Ein Nachteil dieser bekannten Filterkerze mit auswechselbaren Filterschlauch besteht in der zeitaufwendigen, umständlichen Prozedur, die zum Auswechseln des Filterschlauches notwendig ist. Desweiteren entstehen durch das Vorhandensein des konstruktionsbedingt mit Ansatzflächen für Schraubwerkzeuge versehenen Kopfteils Totraume um die Filterkerze, in denen sich temperaturempfindliche Substanzen länger aufhalten. Sie vergrößern zudem den Durchmesser der einzelnen Filterkerze, so daß eine dichte Packung der einzelnen Filterkerzen zu einer größeren Filtereinheit, wie sie in der industriellen Polymerschmelzenfiltration üblich ist, erschwert wird.

Aus der Auslegeschrift DE-B2-2512781 ist ferner eine Filterkerze für rückspülbare Filterapparate bekannt, bei der der Stützkörper fest mit einem Deckel und Stutzen verbunden ist. Diese Verbindung besteht entweder aus einer aushärtenden Dichtungsmasse oder aus einer Schweißverbindung zwischen dem Stützkörper und dem Deckel bzw. Stutzen.

Der Nachteil dieser Vorrichtung besteht darin, daß die Filterkerze im Falle einer Unbrauchbarkeit nur als Ganzes austauschbar ist und somit in Verfahren, bei denen Schmelzrückstände häufig die Filtereinrichtungen unbrauchbar machen, eine Rückspülung jedoch nicht anwendbar ist, einen erhöhten Filterverbrauch verursacht.

Der Erfindung liegt daher die Aufgabe zugrunde, eine Filterkerze von geringer Größe und einfachster Bauart zu entwickeln, die in der Polymerschmelze möglichst kleine Toträume verursacht, die dicht zu größeren Filtereinheiten packbar ist und bei der das Filtergewebe im Falle einer irreversiblen Unbrauchbarkeit durch erhärtete Schmelzrückstände leicht austauschbar ist, ohne die gesamte Filterkerze verwerfen zu müssen.

Mit der neuen Vorrichtung wird die Aufgabe dadurch gelöst, daß ein Filterstrumpf fest mit einer strömungsgünstig ausgeführten Kappe verbunden ist, Filterstrumpf und Filterkappe eine auswechselbare Einheit bilden, und daß sämtliche Bauteile gewindelos ausgeführt sind.

Filterstrumpf und -kappe bestehen vorzugsweise aus einem metallischen Material, besonders bevorzugt aus Edelstahl. Die feste Verbindung zwischen Filterkappe und Filtergewebe besteht vorzugsweise aus einer Schweiß- oder Lötverbindung. Durch den Verzicht auf Ansatzflächen für Schraubenschlüssel läßt sich die Filterkappe weitgehend totraumfrei ausführen. Weiterhin läßt sich die Filterkerze mit den neuen Merkmalen insbesondere auch in kleinen Abmessungen, beispielsweise mit einer Gesamthöhe von unter 15 cm oder unter 10 cm ausführen, wobei der Außenradius der Kappe nur unwesentlich über dem des Filterstrumpfes liegt Der Durchmesser der neuen Filterkerze läßt sich somit sehr klein halten. Beispielsweise sind Durchmesser unter 5 cm oder sogar unter 3 cm und sogar unter 2 cm realisierbar. Insgesamt läßt sich eine eng am Filterkörper anliegende Ausführungsform der gesamten Filterkerze erhalten und damit eine dichtere Packung von einzelnen Filterkerzen zu größeren Filterelementen erreichen. Bevorzugte Form der Kappe ist im wesentlichen eine Kegelform mit spitzem oder stumpfem Kegelwinkel. Der äußere Rand der Kappe ist im wesentlichen zylindrisch ausgeführt, um eine möglichst große Fläche zum Befestigen des Filterstrumpfes zu bieten. Das Innere der Kappe ist im wesentlichen als Passung ausgeführt, die dichtend den Kopf des Filterkörpers umschließt. Damit läßt sich eine dichtende und lösbare Verbindung zum Filterkörper erreichen. Neben den strömungsgünstigen Eigenschaften einer solcherrnaßen ausgeführten Kappe besitzt sie zudem den Vorteil der einfachen und billigen Herstellung.

Die Abdichtung der Filterkerze am unteren Teil geschieht durch einen ringförmigen Klemmkonus. Beim Aufschieben des Klemmkonusses auf den Filterkörper mit dem Filtergewebe wird der untere Teil des Filtergewebes zwischen einem Dichtring, der dem unteren Teil des Filterkörpers zugeordnet ist, und dem Klemmkonus dichtend und lösbar eingepreßt. Dadurch wird sowohl die Befestigung des Klemmkonusses als auch eine Trennung von Schmelz- und Filtratraum am unteren Teil des Filterkörpers erreicht.

Überraschenderweise läßt sich trotz dieser gewindelosen Ausführungsform eine ausreichende Abdichtung zwischen Schmelz- und Filtratraum erreichen. Ein Vorteil dieser Ausführungsform besteht in der besonders leichten und schnellen Zerlegbarkeit der solchermaßen ausgeführten Filterkerze. Die gewindelosen Bauteile lassen sich ebenfalls einfacher und schneller reinigen. Zudem können durch den Verzicht auf Ansatzflächen für Schraubwerkzeuge sämtliche Bauteile besonders strömungsgünstig ausgeführt werden.

Eine weitere bevorzugte Ausführungsform der Vorrichtung ist dadurch gekennzeichnet, daß das Stützelement eine einfache, schraubenförmig ausgebildete Drahtwendel ohne zusätzliche Stützstäbe, wie sie beispielsweise in DE-B2-2512781 offenbart werden,ist, die lose den als Sicherung gegen ein seitliches Verrutschen ausgebildeten Filterkörper umgibt.

Der Filterkörper besitzt eine im wesentlichen zylindrische Grundform, die mit axial verlaufenden Abflußräumen für das Filtrat versehen ist. Die Halterung der Drahtwendel wird vorzugsweise durch 4 oder 6 radial verlaufende Stege erreicht, die gleichzeitig die seitlichen Begrenzungen der Abflußräume bilden. Diese Ausführungsform besitzt den Vorteil, daß sich nach der Trennung von Filterkörper und Stützkörper beide Bauteile leichter von festen Filtratrückständen reinigen lassen bzw. im Falle einer Unbrauchbarkeit nur einzelne Bauteil ausgetauscht werden.

Eine weitere vorzugsweise Ausführungsform ist dadurch gekennzeichnet, daß der Sockel des Filterkörpers einen gewindelosen Anschlußstutzen und zusammen mit einem entsprechenden Loch in einer Bodenplatte eine Steckverbindung aufweist.

Ein besonderer Vorteil dieser Ausführungsform besteht in der einfachen Steckverbindung zwischen Bodenplatte und Filterkerze. Überraschenderweise läßt sich mittels dieser Art der Verbindung eine dichtende Trennung von Schmelz- und Filtratseite erreichen. Zudem ist die Filterkerze in dieser Ausführungsform besonders einfach austauschbar.

In der folgenden Zeichnung wird die neue Vorrichtung an einem Beispiel im senkrechten und waagerechten Schnitt dargestellt und nachfolgend erläutert.

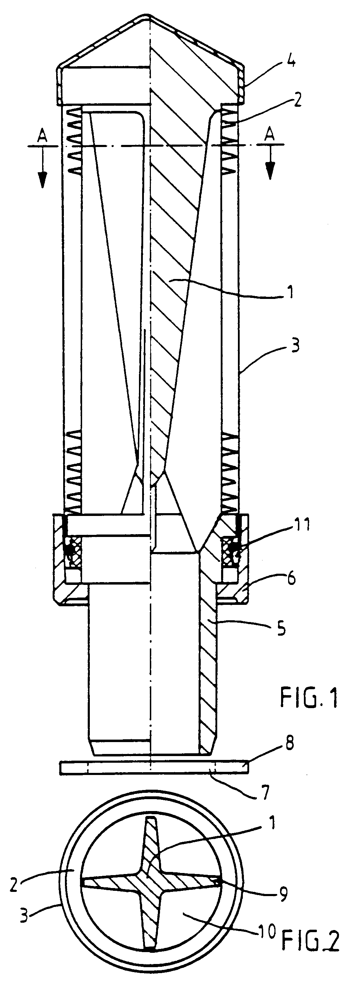

Fig.1 zeigt den senkrechten Schnitt durch die Filterkerze. Das Innere der Filterkerze besteht aus einem Filterkörper 1 und einer lose den Filtergrundkörper 1 umgebenden, schraubenförmigen Drahtwendel 2. Ein Filterstrumpf 3 liegt am Filterkörper 1 und am Stützelement 2 an und ist am Ende mit einer Kappe 4 verschweißt. Die Filterkappe 4 ist in ihrem Inneren durch einen entsprechend ausgeformten Hohlraum begrenzt, der als Passung dichtend und lösbar den Kopfteil des Filterkörpers 1 umschließt. Den unteren, zur Bodenplatte bzw. zum Filtratraum offenen Teil des Filterkörpers 1 bildet ein im wesentlichen zylindrischer, gewindeloser Anschlußstutzen 5, der mit einem Dichtring 11 versehen ist. Dieser ist mit einer ringförmigen, konisch ausgeführten Dichtungsvorrichtung 6 verbunden, wobei der untere Teil des Filterstrumpfes 3 zwischen Dichtring 11 und dem Konus 6 eingeklemmt ist. Der Anschlußstutzen 5 ist steckbar zu einem entsprechenden Loch 7 in einer Bodenplatte 8 ausgeführt.

Fig.2 zeigt den waagerechten Schnitt durch die Filterkerze. Der Filterkörper 1 besitzt vier Stützstege 9, zwischen denen sich Hohlräume 10 zum Abfluß des Filtrats befinden. Der Filterkörper 1 mit den Stegen ist von der schraubenförmigen Drahtwendel 2 umgeben. An der Außenseite der Drahtwendel 2 liegt der Filterstrumpf 3 an.

Zum Austausch der Filterkerze wird diese durch Druck auf den Anschlußstutzen 5 aus der Bodenplatte 8 gelöst. Nach der Entfernung des Dichtungsringes 6 wird durch Zug an der Kappe 4 Filterstrumpf 3 und Filterkappe 4 vom Rest der Filterkerze getrennt. Nach dem Austausch bzw. dem Reinigen der Teile läßt sich die Filterkerze durch Umkehrung der Schritte wieder in die Bodenplatte 8 einbauen.

## Patentansprüche

1. Filterkerze für Filtervorrichtungen, speziell zum Filtern fluider Medien höherer Viskosität, bestehend aus einem Filterkörper (1) und einem Stützelement (2) sowie einem Filterstrumpf (3), der mittels einer Kappe (4) dichtend und lösbar am oberen Ende des Filterkörpers (1) befestigt ist und mittels einer Dichtungsvorrichtung (6) und eines zugeordneten Dichtringes (11) am Sockel des Filterkörpers (1) dichtend und lösbar befestigt ist, dadurch gekennzeichnet, daß der Filterstrumpf (3) fest mit der Kappe (4) verbunden ist, Filterstrumpf (3) mit Filterkappe (4) eine auswechselbare Einheit bilden, und daß sämtliche Bauteile gewindelos ausgeführt sind.

2. Filterkerze nach Anspruch 1, dadurch gekennzeichnet, daß der Stützkörper (2) eine schraubenförmige Drahtwendel ist, die lose den entsprechend geformten Filterkörper(1) umgibt.

3. Filterkerze nach Anspruch 1 oder 2, dadurch gekennzeichnet, daß der Sockel des Filterkörpers (1) einen gewindelosen Anschlußstutzen (5) und zusammen mit einem entsprechenden Loch (7) in einer Bodenplatte (8) eine Steckverbindung aufweist.

## Claims

1. Filter candle for filtering devices, in particular for filtering fluid media of high viscosity, consisting of a filter body (1) and a support element (2) as well as a filter sock (3) which is attached, by means of a cap (4), in sealing and detachable manner to the upper end of filter body (1) and attached, by means of a sealing device (6) and an associated sealing ring (11), in sealing and detachable manner to the base of filter body (1), characterised in that filter sock (3) is firmly connected with cap (4), filter sock (3) with filter cap (4) constitute a replaceable unit and all components are designed without threads.

2. Filter candle according to Claim 1, characterised in that support body (2) is a helical wire coil loosely surrounding the correspondingly shaped filter body (1).

3. Filter candle according to Claim 1 or 2, characterised in that the base of filter body (1) is provided with a threadless connecting piece (5) and so designed as to enable plug-in connection in conjunction with a corresponding hole (7) in a base plate (8).

## Revendications

1. Bougie filtrante pour dispositifs filtrants, notamment pour filtrer des milieux fluides de viscosité relativement élevée, se composant d'un corps filtrant (1) et d'un élément support (2) ainsi que d'un manchon filtrant (3) fixé de façon étanche et amovible à l'extrémité supérieure du corps filtrant (1) au moyen d'un capuchon (4) et fixé de façon échanche et amovible au socle du corps filtrant (1) au moyen d'un dispositif d'étanchéité (6) et une bague d'étanchéité correspondante (11), caractérisée en ce que le manchon filtrant (3) est solidaire du capuchon (4), que le manchon filtrant (3) forme avec le capuchon (4) une unité remplaçable et que toutes les pièces sont conçues sans filetage.

2. Bougie filtrante selon la revendication 1, caractérisée en ce que le corps support (2) est une hélice en fil de fer entourant de façon lâche le corps filtrant (1) de forme correspondante.

3. Bougie filtrante selon la revendication 1 ou 2, caractérisé en ce que le socle du corps filtrant (1) présente un ajutage (5) dépourvu de filetage et un raccordement enfichable avec un trou correspondant (7) dans une plaque de fond (8).
